(19) **Europäisches Patentamt European Patent Office Office européen des brevets**

(11) **EP 4 348 604 B1**

(12) **FASCICULE DE BREVET EUROPEEN**

(45) Date de publication et mention de la délivrance du brevet:
**05.08.2026 Bulletin 2026/32**

(21) Numéro de dépôt: **22731498.6**

(22) Date de dépôt: **19.05.2022**

(51) Classification Internationale des Brevets (IPC):
***G06V 40/13*** *(2022.01)*

(52) Classification Coopérative des Brevets (CPC):
**G06V 40/1312**

(86) Numéro de dépôt international:
**PCT/EP2022/063660**

(87) Numéro de publication internationale:
**WO 2022/253587 (08.12.2022 Gazette 2022/49)**

(54) **CAPTEUR ET PROCÉDÉ D'ACQUISITION BIOMÉTRIQUE SANS CONTACT**

KONTAKTLOSER BIOMETRISCHER SENSOR UND ERFASSUNGSVERFAHREN

CONTACTLESS BIOMETRIC SENSOR AND ACQUISITION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2021 FR 2105814**

(43) Date de publication de la demande:
**10.04.2024 Bulletin 2024/15**

(73) Titulaire: **IDEMIA Public Security France 92400 Courbevoie (FR)**

(72) Inventeurs:
- **FOURRE, Joël-Yann 92400 Courbevoie (FR)**
- **BEAUDET, Jean 92400 Courbevoie (FR)**
- **SIRETA, Alexis 92400 Courbevoie (FR)**

(74) Mandataire: **IPS 2, place Samuel de Champlain 92400 Courbevoie (FR)**

(56) Documents cités:
**EP-A1- 3 312 771    US-A1- 2018 330 142**

## Description

### DOMAINE TECHNIQUE

Le domaine de l'invention est celui des dispositifs et procédés d'acquisition et de traitement biométrique d'une image d'une partie de corps humain présentant des dermatoglyphes. L'invention concerne plus particulièrement l'acquisition sans contact d'une telle image avec un positionnement de la partie de corps humain au-dessus d'un capteur.

### TECHNIQUE ANTÉRIEURE

Le lecteur biométrique MorphoWave™ est un lecteur d'empreintes digitales en 3D qui peut être utilisé pour réaliser un contrôle d'accès à une zone sécurisée au moyen d'un seul passage de la main, sans contact, au-dessus du lecteur. Ce lecteur, qui repose sur une technologie brevetée notamment via le brevet EP 3 312 771 B1, exploite un système d'éclairage uniforme dans une couleur et un système de projection d'une mire constituée de motifs lumineux répétitifs dans au moins une autre couleur. Le document US 2018/330142 A1 décrit un appareil qui capture des empreintes.

### EXPOSÉ DE L'INVENTION

Un objectif de l'invention est de proposer un lecteur biométrique qui soit de conception moins complexe, notamment pour en réduire le coût, sans pour autant en dégrader les performances.

A cet effet, l'invention propose selon un premier aspect un capteur biométrique sans contact, comprenant :

- une face supérieure au-dessus de laquelle, en utilisation, une partie de corps humain présentant des dermatoglyphes est positionnée ;
- une source d'éclairage configurée pour éclairer ladite partie de corps humain à travers la face supérieure ; et
- un imageur configuré pour acquérir une image de ladite partie de corps humain à travers la face supérieure.

La face supérieure est dotée d'un masque à transmissivité lumineuse spatialement variable. Le masque vient, en utilisation, introduire sur ladite partie de corps humain une projection, dite projection d'éclairage, d'une mire présentant une modulation spatiale d'intensité lumineuse. Le masque vient en outre introduire une projection, dite projection d'imagerie, de ladite mire dans l'image acquise par l'imageur.

Certains aspects préférés mais non limitatifs de ce capteur sont les suivants :

- le masque est constitué par la face supérieure sur laquelle est réalisé un motif d'opacité ;
- le masque est constitué d'un support transparent sur lequel est réalisé un motif d'opacité, ledit support étant rapporté sur la face supérieure ;
- la transmissivité lumineuse spatialement variable du masque présente une modulation périodique selon une direction principale ;
- la modulation périodique est une modulation sinusoïdale ou une modulation en triangle.

L'invention concerne également un dispositif de mesure biométrique comprenant un capteur selon le premier aspect de l'invention et une unité de traitement de l'image acquise par l'imageur. L'unité de traitement est configurée pour compenser la projection d'imagerie de ladite mire dans l'image acquise par l'imageur, afin de fournir une image compensée correspondant à la lumière renvoyée par ladite partie du corps humain soumise à la projection d'éclairage.

L'unité de traitement peut en outre être configurée pour compenser la projection d'éclairage de ladite mire dans l'image compensée, afin de fournir une image des dermatoglyphes.

L'unité de traitement peut en outre être configurée pour déduire de l'image compensée une carte de profondeur représentative de la géométrie des dermatoglyphes.

L'unité de traitement peut en outre être configurée pour redresser l'image des dermatoglyphes à l'aide de la carte de profondeur, afin de fournir une image remise à plat des dermatoglyphes.

L'unité de traitement peut en outre être configurée pour mettre en œuvre une méthode de reconnaissance biométrique d'identité sur la base de l'image des dermatoglyphes ou sur la base de l'image remise à plat des dermatoglyphes.

L'unité de traitement peut en outre être configurée pour déduire de l'image compensée une image d'amplitude de la modulation introduite par la projection d'éclairage.

L'unité de traitement peut en outre être configurée pour mettre en œuvre, sur la base de ladite image d'amplitude, une méthode de détection de fraude visant à authentifier que la partie du corps humain est une partie authentique d'un corps humain.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

La figure 1 est un schéma d'un capteur biométrique sans contact selon un mode de réalisation possible de l'invention ;

La figure 2 est un diagramme illustrant schématiquement des étapes mises en œuvre lors de l'exécution d'un procédé de mesure biométrique selon un mode de réalisation possible de l'invention.

## EXPOSÉ DÉTAILLÉ DE MODES DE RÉALISATION PARTICULIERS

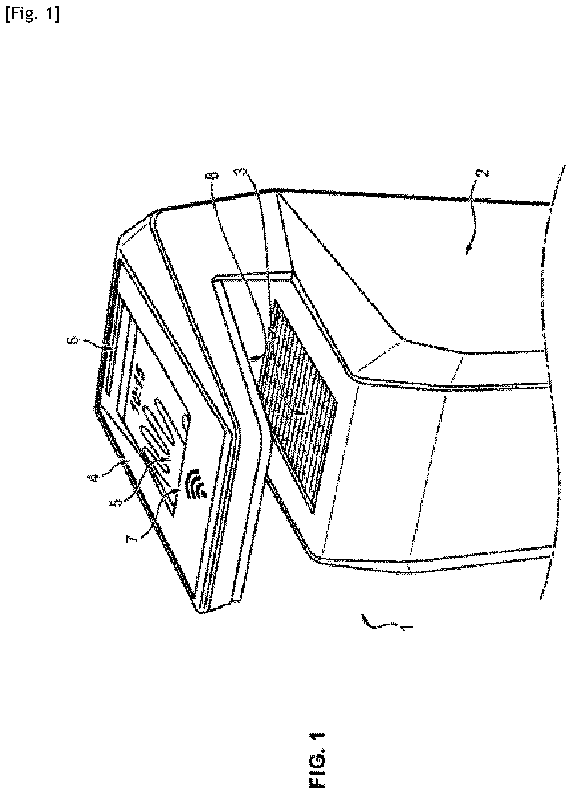

L'invention porte sur un capteur biométrique sans contact dont un exemple de réalisation est illustré sur la figure 1. Dans cet exemple, le capteur 1 comprend un pupitre 2 doté d'une face supérieure 3 au-dessus de laquelle, en utilisation, une partie de corps humain présentant des dermatoglyphes est positionnée. Le positionnement de la partie de corps humain peut s'effectuer de manière dynamique avec un passage de ladite partie de corps humain au-dessus de la face supérieure 3 selon un mouvement de balayage (acquisition en mouvement) ou *a contrario* de manière statique au-dessus de la face supérieure 3 (acquisition statique).

La face supérieure peut être optionnellement surmontée d'une casquette 4. La face supérieure et la casquette 4 sont écartées d'une distance de quelques centimètres pour définir entre elles une zone d'acquisition, ici ouverte frontalement et latéralement, formant un passage pour une main d'un utilisateur.

La casquette 4 peut intégrer un écran 5, par exemple un écran tactile, destiné notamment à indiquer à l'utilisateur comment positionner sa main. La casquette 4 peut en outre comporter un chenillard 6 constitué de diodes électroluminescentes disposées en ligne et programmé pour allumer successivement les diodes à une vitesse souhaitée pour le déplacement de la main.

La casquette 4 peut en outre intégrer un lecteur sans contact de carte d'accès 7 permettant la réalisation d'une authentification multifactorielle.

Le pupitre 2 renferme une source d'éclairage configurée pour éclairer ladite partie de corps humain à travers la face supérieure 3 et un imageur configuré pour acquérir une image de ladite partie de corps humain à travers la face supérieure 3. L'imageur est globalement placé à la verticale de la face supérieure 3 tandis que la source d'éclairage est inclinée par rapport à l'imageur de manière à ce que la direction d'éclairage et la direction d'imagerie forment entre elles un angle préférentiellement supérieur à 10°, encore plus préférentiellement supérieur à 20°.

Le pupitre 2 peut par ailleurs comprendre un capteur 8, par exemple une barrière infrarouge, permettant de détecter l'entrée de la main dans la zone d'acquisition et commander l'activation de la source d'éclairage et de l'imageur.

La source d'éclairage est configurée pour réaliser un éclairage uniforme de la face supérieure 3 dans une seule couleur, visible ou non (par exemple dans l'infrarouge). La source d'éclairage peut ainsi comprendre une unique diode électroluminescente associée à une pièce optique servant à contrôler la divergence du faisceau d'éclairage et à le diriger vers la zone d'acquisition. Ainsi, contrairement à la source d'éclairage du brevet EP 3 312 771 B1, la source d'éclairage du capteur selon l'invention exploite une seule couleur d'éclairage et n'incorpore pas un système de projection d'une mire. Le coût du capteur se trouve donc réduit, tout en maintenant ses performances puisque la quantité de lumière collectée par l'imageur n'est que légèrement altérée du fait de son absorption par le masque.

Selon l'invention, la face supérieure 3 du capteur 1 est dotée d'un masque à transmissivité lumineuse spatialement variable. Ce masque étant présent dans la voie d'éclairage, il vient, en utilisation, introduire sur la partie de corps humain présente dans la zone d'acquisition une projection, dite projection d'éclairage, d'une mire présentant une modulation spatiale d'intensité lumineuse. Par ailleurs, ce masque est également présent dans la voie d'imagerie (l'imageur regarde la partie de corps humain à travers le masque) et vient donc également introduire une projection, dite projection d'imagerie, de ladite mire dans l'image acquise par l'imageur.

L'imageur peut être une caméra couleur ou, de préférence, une caméra noir et blanc plus sensible qu'une caméra couleur et donc à même de compenser l'altération liée à l'absorption de la lumière par le masque.

Dans un mode de réalisation possible, le capteur comprend en périphérie du masque un marqueur dont la position peut être contrôlée dans chaque image acquise par l'imageur afin de compenser de possibles dérives du matériel, comme une dilatation sous l'effet de la température. Ceci permet de s'assurer que la correction de la projection d'imagerie décrite ci-après est toujours optimale. Optionnellement, la position du masque peut être utilisée pour compenser une information de distance en s'appuyant sur un apprentissage des dérives. En présence d'une casquette 4, l'écran 5 peut être utilisé pour afficher une image de contrôle du masque et permettre ainsi de constater, et de là de corriger, une éventuelle dérive mécanique.

La face supérieure 3 est typiquement transparente et le masque peut être constitué par la face supérieure 3 sur laquelle est réalisée un motif d'opacité. Alternativement, le masque peut être constitué d'un support transparent sur lequel est réalisé un motif d'opacité, ledit support étant rapporté sur la face supérieure. A titre d'exemples, le motif d'opacité peut être réalisé avec un élément opaque tramé (par exemple un chrome sur verre ou une encre noire sérigraphiée ou imprimée par jet d'encre) ou par un élément de densité variable (gélatine, encre de sublimation thermique par exemple).

Le motif d'opacité présente une transmissivité lumineuse spatialement variable telle que dans les zones les plus transparentes plus de 90% de la lumière incidente est de préférence transmise tandis que dans les zones les moins transparentes au moins 30% (plus préférentiellement au moins 50% et encore plus préférentiellement au moins 70%) de la lumière incidente est de préférence transmise. En particulier, le motif d'opacité ne présente aucune zone complètement opaque pour ne pas faire d'occlusion du système d'imagerie. Le taux de modulation (ratio entre la transmission maximale et la transmission minimale) du motif d'opacité peut être inférieur à 50%, voire même inférieur à 30%. La transmission minimale et la transmission maximale sont considérées sur une surface correspondant à la résolution optique du système d'imagerie au niveau du masque, le motif d'opacité ne provoquant pas de tache complètement noire dans l'image acquise par l'imageur.

Dans un mode de réalisation privilégié, le motif d'opacité présente une modulation périodique de sa transmissivité lumineuse selon une direction principale. Notamment, le motif d'opacité peut être invariant selon une première direction x (par exemple selon une direction de mouvement de la main dans la zone d'acquisition) et correspondre à une fonction périodique selon un seconde direction y orthogonale à la première direction x. La modulation périodique peut notamment être une modulation sinusoïdale ou une modulation en triangle.

La modulation périodique de la transmissivité lumineuse du masque peut ainsi être par exemple de la

forme $T(y) = a + b.\cos(\frac{2\pi.y}{p} + \phi)$, avec T(y) la transmission en fonction de y, a et b deux constantes telles que $a - b > 0.3$ (de préférence supérieur à 0.5, encore plus de préférence supérieur à 0.7) et $a + b <= 1$, p la période, et $\phi$ une constante. La période du masque est de préférence choisie grande devant celles des dermatoglyphes (350 à 700 $\mu$m), par exemple entre 3 et 5 mm.

Pour simplifier la reconnaissance de la mire et supprimer le risque de confusion entre deux périodes, on peut ajouter une modulation d'amplitude b(y) (le coefficient b étant par exemple différent pour chaque période), une modulation de fréquence p(y) et/ou une modulation de phase $\phi(y)$, avec p(y) et/ou $\phi(y)$ une fonction de y (soit une fonction continue, soit une fonction constante sur chaque période et discontinue entre les périodes).

Pour des raisons de simplicité de fabrication, une fonction triangle peut par exemple être utilisée à la place du sinus. Une fonction créneau est quant à elle à éviter car elle présente trop d'énergie à plus haute fréquence et peut perturber l'extraction des dermatoglyphes.

L'invention concerne également un dispositif de mesure biométrique qui comprend un capteur sans contact tel que précédemment décrit ainsi qu'une unité de traitement de l'image acquise par l'imageur. L'unité de traitement peut être intégrée directement au capteur ou être extérieure au capteur. Elle peut être embarquée au sein du pupitre ou prendre la forme d'une unité distante reliée au capteur par un réseau de communication, par exemple sans fil. Elle peut également être composée de différentes parties, et différentes parties du procédé décrit ci-après peuvent être mises en œuvre par des parties différentes de l'unité de traitement, qui peuvent être distantes les unes des autres et communiquer entre elles par un réseau de communication.

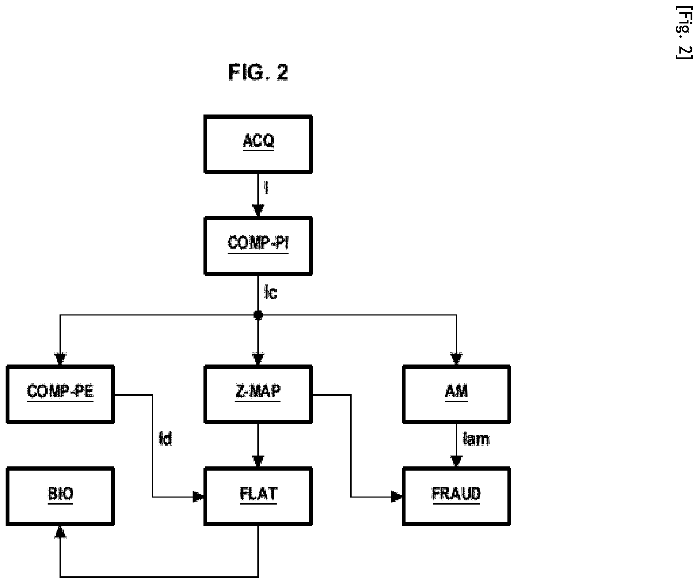

En référence à la figure 2, suite à l'acquisition lors d'une étape ACQ par l'imageur d'une image I, l'unité de traitement est configurée pour compenser (lors d'une étape COMP-PI) la projection d'imagerie de la mire dans l'image acquise par l'imageur, afin de fournir une image compensée Ic correspondant à la lumière renvoyée par ladite partie du corps humain soumise à la projection d'éclairage. Cette étape COMP-PI permet de corriger le fait que la mire est présente dans la voie d'imagerie et de là d'appliquer à partir de l'image compensée des traitements classiques d'images biométriques, tels par exemple ceux présentés dans le brevet EP 3 312 771 B1, dans la demande EP 3 726 423 A1 ou encore dans l'article « Système complet de reconstruction 2,5D d'empreintes digitales : une étude de faisabilité » de Laurent Condat et Vincent Roullier (RFIA 2012 - Reconnaissance des Formes et Intelligence Artificielle, Jan 2012, Lyon, France. pp.978-2-9539515-2-3. hal-00656576).

Considérant (u,v) les coordonnées d'un pixel dans l'image acquise et I(u,v) l'intensité mesurée en un pixel de l'image acquise, cette compensation COMP-PI peut comprendre l'application d'une fonction de correction prédéterminée de sorte que l'intensité en un pixel de l'image compensée Ic(u,v) peut s'exprimer selon Ic(u,v) = (I(u,v)- offset(y))*G/T(y) avec G une constante, T(y) la transmissivité de la mire en un point y correspondant au pixel (u,v) et offset(y) une fonction de décalage qui peut être optionnellement introduite pour prendre en compte la diffusion de la lumière par le masque.

Dans un mode de réalisation possible, la fonction de correction peut être prédéterminée en ayant connaissance du motif d'opacité et de sa projection dans l'image acquise. Alternativement, la fonction de correction peut être prédéterminée au cours d'une phase de calibration exploitant une mire d'étalonnage de réflectance uniforme apposée directement au contact du masque sur la face supérieure du capteur. Par exemple, il est possible d'acquérir une première image avec une mire d'étalonnage uniformément claire et une seconde image avec une mire d'étalonnage uniformément sombre ce qui permet de calculer des coefficients de gain g(u,v) et de décalage o(u,v) tels qu'après correction de la projection d'imagerie chacune des premières et secondes images des mires d'étalonnage est alignée avec la projection d'éclairage:

$$\begin{cases} I_c(u,v) = G \dfrac{I(u,v) - o(u,v)}{T(u,v)} \\ I_{c(u,v)} = \alpha T(u,v) \end{cases}$$

Cette seconde approche présente l'avantage de compenser l'ensemble des autres défauts (vignettage par exemple) liés au système optique (uniformité de l'éclairage notamment) et/ou à la réalisation du masque.

Toujours en référence à la figure 2, l'unité de traitement peut en outre être configurée pour compenser au cours d'une étape COMP-PE la projection d'éclairage de ladite mire dans l'image compensée, afin de fournir une image des dermatoglyphes Id. Une telle compensation peut par exemple être réalisée au moyen d'un filtre coupe-bande, typiquement un filtre centré autour de la fréquence spatiale de la mire (par exemple 3mm) et dont la largeur de bande est adaptée pour que le filtre n'altère pas les dermatoglyphes (par exemple une largeur de bande de l'ordre de 1mm).

L'unité de traitement peut par ailleurs être configurée pour, au cours d'une étape Z-MAP, déduire de l'image compensée une carte de profondeur représentative de la géométrie des dermatoglyphes. Pour ce faire, chaque point de l'image compensée peut être mis en correspondance avec la coordonnée y du motif d'opacité, ce qui permet par triangulation de calculer la distance entre l'imageur et la partie de corps humain positionnée dans la zone d'acquisition. L'établissement de la carte de profondeur peut être réalisé par calcul de phase, par exemple dans le plan de Fourier, par des filtres de Gabor ou au moyen de solutions reposant sur un apprentissage profond. Lorsque le motif d'opacité est périodique, la mise en correspondance est à une période près. Cette ambiguïté peut néanmoins être levée en exploitant des considérations géométriques (par exemple un *a priori* sur la distance, la zone d'acquisition pouvant être bornée entre la face supérieure 3 et la casquette 4). Il est également possible d'utiliser un motif d'opacité non périodique (par exemple, une sinusoïde à laquelle une modulation d'amplitude et/ou de phase est ajoutée) ou encore d'exploiter un repère unique (un bord du motif par exemple). Il est en outre possible de mettre en œuvre une technique s'appuyant sur la fréquence apparente du motif d'opacité (lorsque l'éclairage et le centre optique de l'imageur ne sont pas à une même distance du plan contenant le motif) ou sur la démodulation (le motif étant d'autant plus flou que l'on s'éloigne de celui-ci). La largeur du doigt ou un capteur de distance secondaire peuvent par ailleurs être exploités. Enfin, un choix arbitraire peut être réalisé, ceci aboutissant approximativement à une simple erreur d'échelle sur le doigt qui peut être tolérée par les algorithmes de comparaison.

Comme illustré par la figure 2, l'unité de traitement peut en outre être configurée pour, au cours d'une étape FLAT, redresser l'image des dermatoglyphes Id à l'aide de la carte de profondeur, afin de fournir une image remise à plat des dermatoglyphes. Cette étape FLAT peut être réalisée conformément à l'enseignement du brevet EP 3 312 771 B1 ou encore au moyen d'une solution d'apprentissage profond.

L'unité de traitement peut en outre être configurée pour mettre en œuvre, au cours d'une étape BIO, une méthode de reconnaissance biométrique d'identité sur la base de l'image des dermatoglyphes Id ou, comme représenté sur la figure 2, sur la base de l'image remise à plat des dermatoglyphes.

Dans un mode de réalisation possible exploitant par exemple l'enseignement de la demande EP 3 726 423 A1, l'unité de traitement est en outre configurée pour, au cours d'une étape AM, déduire de l'image compensée Ic une image Iam d'amplitude de la modulation introduite par la projection d'éclairage.

Cette image d'amplitude Iam peut être exploitée pour aider à identifier les franges du motif d'opacité dans le cas d'une modulation d'amplitude de celui-ci. Par ailleurs, sur la base de ladite image d'amplitude Iam, l'unité de traitement peut, au cours d'une étape FRAUD, mettre en œuvre une méthode de détection de fraude visant à authentifier que la partie du corps humain est une partie authentique d'un corps humain. Cette étape peut notamment comprendre la comparaison de l'image d'amplitude à un intervalle dépendant de la profondeur telle que déterminée par la carte de profondeur et la détermination que le doigt est authentique ou contrefait selon la proportion de points appartenant à cet intervalle.

On notera que pour la détection de fraude, il peut être avantageux de compenser le flou de projection de la mire sur le doigt. Dans le cas d'une mire approximativement sinusoïdale, ceci peut se faire en corrigeant l'image d'amplitude de modulation Iam sur la base d'une connaissance de l'amplitude de modulation de la mire pour une distance donnée. Cette connaissance peut être issue d'une calibration (comprenant l'acquisition d'images d'un objet uniforme plan à différentes distances de la surface supérieure du capteur pour calculer l'amplitude de la mire) ou d'un calcul (utilisant la distance entre la mire en le doigt et un paramètre correspondant à l'ouverture angulaire de l'éclairage).

Dans ce qui précède, on a décrit un éclairage et un masque monochromatiques. L'invention s'étend toutefois également à un masque présentant une variation colorée qui, s'il peut être plus onéreux à fabriquer, présente l'avantage d'offrir une meilleure qualité d'image et de permettre d'avoir recours à des fréquences plus élevées aboutissant à une meilleure reconstruction 3D. Un exemple de réalisation d'un tel masque comprend la superposition de trois motifs sinusoïdaux à 120° de décalage de phase (un en cyan, un autre en magenta et le troisième en jaune) ou encore deux motifs verts et bleus en opposition de phase. En supposant la couleur du doigt uniforme et la diffusion du doigt dans le vert et le bleu similaire, on obtient dans le cas d'un éclairage bleu et vert l'image de texture l'image des dermatoglyphes par une simple somme (pondérée) des images bleues et vertes ($I' = aI_v + bI_b$), ainsi qu'une image présentant une amplitude de modulation maximale comme une différence (avec la même pondération) de ces même deux images ($I' = aI_v - bI_b$). Cette dernière image est utilisée pour extraire la phase (étape Z-MAP) et l'amplitude (étape AM).

## Revendications

1. Capteur biométrique sans contact (1), comprenant :

- une face supérieure (3) au-dessus de laquelle, en utilisation, une partie de corps humain présentant des dermatoglyphes est positionnée ;
- une source d'éclairage configurée pour éclairer ladite partie de corps humain à travers la face supérieure ; et
- un imageur configuré pour acquérir une image (I) de ladite partie de corps humain à travers la face supérieure ;

**caractérisé en ce que** la face supérieure est dotée d'un masque à transmissivité lumineuse spatialement variable, ledit masque venant, en utilisation, introduire sur ladite partie de corps humain une projection, dite projection d'éclairage, d'une mire présentant une modulation spatiale d'intensité lumineuse, ledit masque venant en outre introduire une projection, dite projection d'imagerie, de ladite mire dans l'image acquise par l'imageur.

2. Capteur selon la revendication 1, dans lequel le masque est constitué par la face supérieure sur laquelle est réalisé un motif d'opacité.

3. Capteur selon la revendication 1, dans lequel le masque est constitué d'un support transparent sur lequel est réalisé un motif d'opacité, ledit support étant rapporté sur la face supérieure.

4. Capteur selon l'une des revendications 1 à 3, dans lequel la transmissivité lumineuse spatialement variable du masque présente une modulation périodique selon une direction principale.

5. Capteur selon la revendication 4, dans lequel la modulation périodique est une modulation sinusoïdale ou une modulation en triangle.

6. Dispositif de mesure biométrique comprenant un capteur selon l'une des revendications 1 à 5 et une unité de traitement de l'image acquise par l'imageur, l'unité de traitement étant configurée pour compenser (COMP-PI) la projection d'imagerie de ladite mire dans l'image acquise par l'imageur, afin de fournir une image compensée (Ic) correspondant à la lumière renvoyée par ladite partie du corps humain soumise à la projection d'éclairage.

7. Dispositif de mesure biométrique selon la revendication 6, dans lequel l'unité de traitement est en outre configurée pour compenser (COMP-PE) la projection d'éclairage de ladite mire dans l'image compensée, afin de fournir une image des dermatoglyphes (Id).

8. Dispositif de mesure biométrique selon la revendication 7, dans lequel l'unité de traitement est en outre configurée pour mettre en œuvre une méthode de reconnaissance biométrique d'identité (BIO) sur la base de l'image des dermatoglyphes.

9. Dispositif de mesure biométrique selon la revendication 7, dans lequel l'unité de traitement est en outre configurée pour déduire (Z-MAP) de l'image compensée une carte de profondeur représentative de la géométrie des dermatoglyphes.

10. Dispositif de mesure biométrique selon la revendication 9, dans lequel l'unité de traitement est en outre configurée pour redresser (FLAT) l'image des dermatoglyphes à l'aide de la carte de profondeur, afin de fournir une image remise à plat des dermatoglyphes.

11. Dispositif de mesure biométrique selon la revendication 10, dans lequel l'unité de traitement est en outre configurée pour mettre en œuvre une méthode de reconnaissance biométrique d'identité (BIO) sur la base de l'image remise à plat des dermatoglyphes.

12. Dispositif selon l'une des revendications 6 à 11, dans lequel l'unité de traitement est en outre configurée pour déduire (AM) de l'image compensée une image (Iam) d'amplitude de la modulation introduite par la projection d'éclairage.

13. Dispositif selon la revendication 12, dans lequel l'unité de traitement est en outre configurée pour mettre en œuvre, sur la base de ladite image d'amplitude (Iam), une méthode de détection de fraude (FRAUD) visant à authentifier que la partie du corps humain est une partie authentique d'un corps humain.

14. Procédé de mesure biométrique au moyen d'un dispositif selon l'une des revendications 6 à 13, comprenant les étapes :

- d'acquisition par l'imageur d'une image d'une partie de corps humain positionnée au-dessus de la face supérieure du capteur ;
- de traitement de l'image acquise par l'unité de traitement dudit dispositif.

15. Produit programme d'ordinateur comprenant des instructions qui, lorsque le programme est exécuté par un ordinateur, conduisent celui-ci à mettre en œuvre l'étape de traitement du procédé selon la revendication 14.

**Patentansprüche**

1. Berührungsloser biometrischer Sensor (1), umfassend:

- eine Oberseite (3), über der im Betrieb ein mit Dermatoglyphen versehener Teil des menschlichen Körpers positioniert wird;
- eine Beleuchtungsquelle, die so ausgelegt ist, dass sie den genannten menschlichen Körperteil durch die Oberseite beleuchtet; und
- einen Bildgeber, der so ausgelegt ist, dass er ein Bild (I) des genannten menschlichen Körperteils durch die Oberseite hindurch aufnimmt, **dadurch gekennzeichnet, dass** die Oberseite mit einer Maske mit räumlich variabler Lichtdurchlässigkeit versehen ist, wobei die Maske im Betrieb auf den genannten Körperteil eine Projektion, die sogenannte Beleuchtungsprojektion, eines Testmusters mit räumlicher Modulation der Lichtintensität projiziert, wobei die Maske ferner eine Projektion, die sogenannte Bildprojektion, des genannten Testmusters in das vom Bildgeber erfasste Bild projiziert.

2. Sensor nach Anspruch 1, wobei die Maske aus der Oberseite besteht, auf der ein Opazitätsmuster ausgebildet ist.

3. Sensor nach Anspruch 1, wobei die Maske aus einem transparenten Träger besteht, auf dem ein Opazitätsmuster ausgebildet ist, wobei der Träger auf die Oberseite aufgebracht ist.

4. Sensor nach einem der Ansprüche 1 bis 3, wobei die räumlich variable Lichtdurchlässigkeit der Maske eine periodische Modulation in einer Hauptrichtung aufweist.

5. Sensor nach Anspruch 4, wobei die periodische Modulation eine sinusförmige Modulation oder eine dreieckförmige Modulation ist.

6. Biometrische Messvorrichtung, umfassend einen Sensor gemäß einem der Ansprüche 1 bis 5 und eine Verarbeitungseinheit für das vom Bildgeber erfasste Bild, wobei die Verarbeitungseinheit so konfiguriert ist, dass sie die Bildprojektion der genannten Zielmarke in dem vom Bildgeber erfasste Bild kompensiert (COMP-PI), um ein kompensiertes Bild (Ic) bereitzustellen, das dem von dem der Beleuchtungsprojektion ausgesetzten Teil des menschlichen Körpers zurückgeworfenen Licht entspricht.

7. Biometrische Messvorrichtung nach Anspruch 6, wobei die Verarbeitungseinheit ferner dazu ausgelegt ist, die Beleuchtungsprojektion des Zielbildes in dem kompensierten Bild zu kompensieren (COMP-PE), um ein Bild der Dermatoglyphen (Id) bereitzustellen.

8. Biometrische Messvorrichtung nach Anspruch 7, wobei die Verarbeitungseinheit ferner so konfiguriert ist, dass sie ein biometrisches Identitätserkennungsverfahren (BIO) auf der Grundlage des Dermatoglyphenbildes durchführt.

9. Biometrische Messvorrichtung nach Anspruch 7, wobei die Verarbeitungseinheit ferner so konfiguriert ist, dass sie aus dem kompensierten Bild eine Tiefenkarte ableitet (Z-MAP), die die Geometrie der Dermatoglyphen darstellt.

10. Biometrische Messvorrichtung nach Anspruch 9, wobei die Verarbeitungseinheit ferner so konfiguriert ist, dass sie das Dermatoglyphenbild unter Verwendung der Tiefenkarte flachstellt (FLAT), um ein flachgestelltes Dermatoglyphenbild bereitzustellen.

11. Biometrische Messvorrichtung nach Anspruch 10, wobei die Verarbeitungseinheit ferner so konfiguriert ist, dass sie ein biometrisches Identitätserkennungsverfahren (BIO) auf der Grundlage des abgeflachten Bildes der Dermatoglyphen durchführt.

12. Vorrichtung nach einem der Ansprüche 6 bis 11, wobei die Verarbeitungseinheit ferner dazu ausgelegt ist, aus dem kompensierten Bild ein Bild (Iam) der Amplitude der durch die Beleuchtungsprojektion eingeführten Modulation abzuleiten (AM).

13. Vorrichtung nach Anspruch 12, wobei die Verarbeitungseinheit ferner so konfiguriert ist, dass sie auf der Grundlage des genannten Amplitudenbildes (Iam) ein Betrugserkennungsverfahren (FRAUD) durchführt, um zu authentifizieren, dass der menschliche Körperteil ein authentischer Teil eines menschlichen Körpers ist.

14. Verfahren zur biometrischen Messung mittels einer Vorrichtung nach einem der Ansprüche 6 bis 13, umfassend die folgenden Schritte: - Erfassen eines Bildes eines über der Oberseite des Sensors positionierten menschlichen Körperteils durch den Bildgeber; - Verarbeiten des erfassten Bildes durch die Verarbeitungseinheit der Vorrichtung.

15. Computerprogrammprodukt, das Anweisungen umfasst, die, wenn das Programm von einem Computer ausgeführt wird, diesen veranlassen, den Verarbeitungsschritt des Verfahrens gemäß Anspruch 14 durchzuführen.

**Claims**

1. A contactless biometric sensor (1), comprising:

   - an upper face (3) above which, in use, a human body part which has dermatoglyphs is positioned;

- a lighting source configured to light said human body part through the upper face; and
- an imager configured to acquire an image (I) of said human body part through the upper face;

**characterized in that** the upper face is provided with a mask having spatially variable light transmissivity, said mask, in use, introducing onto said human body part a projection, referred to as lighting projection, of a test pattern having a spatial modulation of light intensity, said mask also introducing a projection, referred to as imaging projection, of said pattern into the image acquired by the imager.

2. The sensor according to claim 1, wherein the mask consists of the upper face on which an opacity pattern is made.

3. The sensor according to claim 1, wherein the mask consists of a transparent substrate on which an opacity pattern is made, said substrate being applied onto the upper face.

4. The sensor according to one of claims 1 to 3, wherein the spatially variable light transmissivity of the mask has a periodic modulation along a main direction.

5. The sensor according to claim 4, wherein the periodic modulation is a sinusoidal modulation or a triangular modulation.

6. A biometric measurement device comprising a sensor according to one of claims 1 to 5 and a unit for processing the image acquired by the imager, the processing unit being configured to compensate (COMP-PI) for the imaging projection of said test pattern in the image acquired by the imager, in order to provide a compensated image (Ic) corresponding to the light reflected by said human body part exposed to the lighting projection.

7. The biometric measurement device according to claim 6, wherein the processing unit is further configured to compensate (COMP-PE) for the lighting projection of said test pattern in the compensated image, in order to provide an image of the dermatoglyphs (Id).

8. The biometric measurement device according to claim 7, wherein the processing unit is further configured to implement a biometric identity recognition method (BIO) based on the image of the dermatoglyphs.

9. The biometric measurement device according to claim 7, wherein the processing unit is further configured to derive (Z-MAP) from the compensated image a depth map representing the geometry of the dermatoglyphs.

10. The biometric measurement device according to claim 9, wherein the processing unit is further configured to straighten (FLAT) the image of the dermatoglyphs by means of the depth map, in order to provide a flattened image of the dermatoglyphs.

11. The biometric measurement device according to claim 10, wherein the processing unit is further configured to implement a biometric identity recognition method (BIO) based on the flattened image of the dermatoglyphs.

12. The device according to one of claims 6 to 11, wherein the processing unit is further configured to derive (AM) from the compensated image an amplitude image (Iam) of the modulation introduced by the lighting projection.

13. The device according to claim 12, wherein the processing unit is further configured to implement, based on said amplitude image (Iam), a fraud-detection method (FRAUD) intended to authenticate that the human body part is an authentic human body part.

14. The biometric measurement method by means of a device according to one of claims 6 to 13, comprising the steps of:

    - acquiring by the imager an image of a human body part positioned above the upper face of the sensor;
    - processing the image acquired by the processing unit of said device.

15. A computer program product comprising instructions which, when the program is executed by a computer, lead the latter to implement the processing step of the method according to claim 14.

[Fig. 1]

FIG. 1

[Fig. 2]

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3312771 B1
- US 2018330142 A1

- EP 3726423 A1

**Littérature non-brevet citée dans la description**

- **LAURENT CONDAT** ; **VINCENT ROULLIER**. Système complet de reconstruction 2,5D d'empreintes digitales : une étude de faisabilité. *RFIA 2012 - Reconnaissance des Formes et Intelligence Artificielle*, January 2012, 978-2, 9539515-2, 3